# FASCICULE DE BREVET EUROPEEN

(11) **EP 0 491 627 B1**
(45) Date de publication et mention de la délivrance du brevet: **21.06.1995**
(21) Numéro de dépôt: 91403445.9
(22) Date de dépôt: 18.12.1991
(51) Int. Cl.: B60T 17/22, B25B 27/26

(54) **Outil de déréglage d'un levier de frein auto-régleur**
Rückstellwerkzeug eines selbsteinstellenden Bremshebels
Resetting tool of a selfadjusting brake lever

(30) Priorité: 19.12.1990 FR 9016207
(43) Date de publication de la demande: 24.06.1992
(73) Titulaire: FACOM, Société dite:, 91423 Morangis Cédex (FR)
(72) Inventeur: Leonard, André, F-57180 Terville (FR)
(74) Mandataire: Jacobson, Claude

(56) Documents cités:
- US-A- 1 537 534
- US-A- 4 625 353
- US-A- 4 798 265

## Description

La présente invention est relative à un outil de déréglage d'un levier de frein auto-régleur comprenant un mécanisme unidirectionnel à crans dont un premier élément est solidaire d'une vis sans fin et dont le second élément est solidaire du levier, la vis sans fin présentant un prolongement qui traverse librement ledit second élément et étant sollicitée par un ressort vers ce second élément.

Sur les véhicules poids-lourds, la mise en action des freins est généralement assurée par la rotation d'une came, actionnée par un levier qui est poussé par un piston. L'usure des garnitures de frein est compensée par un dispositif placé dans le levier de frein, assurant automatiquement un rattrapage équivalent à l'usure des garnitures de frein. Ces leviers de frein sont dénommés leviers auto-régleurs.

Certains leviers auto-régleurs, notamment commercialisés par la société suédoise HALDEX et décrits dans le document "Le régleur de jeu automatique Haldex AA1. Manuel Technique, de septembre 1989, comportent entre autres, comme indiqué plus haut, une vis sans fin qui engrène sur une couronne dentée, et un système de roue libre à crans de blocage n'autorisant une rotation de la vis dans fin que dans le sens du rattrapage d'usure. La vis sans fin est pourvue de crans identiques aux crans de la roue libre, et les crans sont maintenus pressés les uns contre les autres par un ressort comprimé entre le corps du levier de frein et l'arrière de la vis sans fin.

Lors du remplacement des garnitures de freins usées, il faut effectuer préalablement un déréglage de ces garnitures, en dévissant la vis sans fin du levier de frein par action sur le prolongement saillant de cette vis. Pour pouvoir effectuer cette rotation inversée, il faut vaincre la résistance des crans de blocage de la roue libre, ce qui engendre rapidement une dégradation du dispositif.

L'invention vise à permettre de désolidariser la vis sans fin d'un levier auto-régleur du genre ci-dessus, de sa roue libre et de ses crans de blocage, de telle sorte que le déréglage des garnitures de frein puisse s'effectuer sans dégrader le dispositif d'auto-réglage.

A cet effet, l'outil de déréglage suivant l'invention est caractérisé en ce qu'il comprend un étrier comportant d'un côté un organe de centrage et de l'autre côté, en regard de cet organe, une vis de serrage creuse traversée axialement par une tige ronde librement rotative, l'extrémité intérieure de cette tige étant munie d'une tête dans laquelle est ménagé un logement creux adapté pour venir en prise d'entraînement en rotation avec ledit prolongement, la profondeur de ce logement étant inférieure à la longueur saillante de ce prolongement, l'extrémité extérieure de la tige comportant une tête pour son entraînement en rotation.

La profondeur du logement creux de la tête intérieure de la tige centrale, doit bien entendu être inférieure à la longueur saillante du prolongement de la vis sans fin d'une distance suffisamment importante pour permettre le recul nécessaire de cette vis sans fin pour écarter ses crans de ceux de la roue libre.

Pour faciliter la mise en place de cet outil, un développement de l'invention est caractérisé par le fait que la tige centrale est montée coulissante dans la vis creuse. Le jeu longitudinal est alors tel que quand l'organe de centrage est engagé dans la vis de compression du ressort, cette tige centrale puisse coulisser, vers le levier, jusqu'à ce que sa tête creuse coiffe le prolongement de la vis sans fin, facilitant ainsi la phase d'approche de la vis de serrage.

Le US-A-4 798 265 décrit un outil à étrier et vis de serrage, destiné à réaliser la lubrification d'un frein à réglage manuel.

Un exemple de réalisation de l'invention va maintenant être décrit en regard des dessins annexés dans lesquels :
- la Figure 1 montre en coupe un levier de frein auto-régleur, avec un outil de déréglage installé en prise sur ce levier, sans exercer de pression sur la vis sans fin et, de ce fait, avec les crans de cette vis sans fin emboîtés dans ceux de la roue libre;
- la Figure 2 est une vue analogue mais avec une pression exercée sur la vis sans fin et, de ce fait, avec les crans de cette vis sans fin quine sont plus solidaires de ceux de la roue libre.

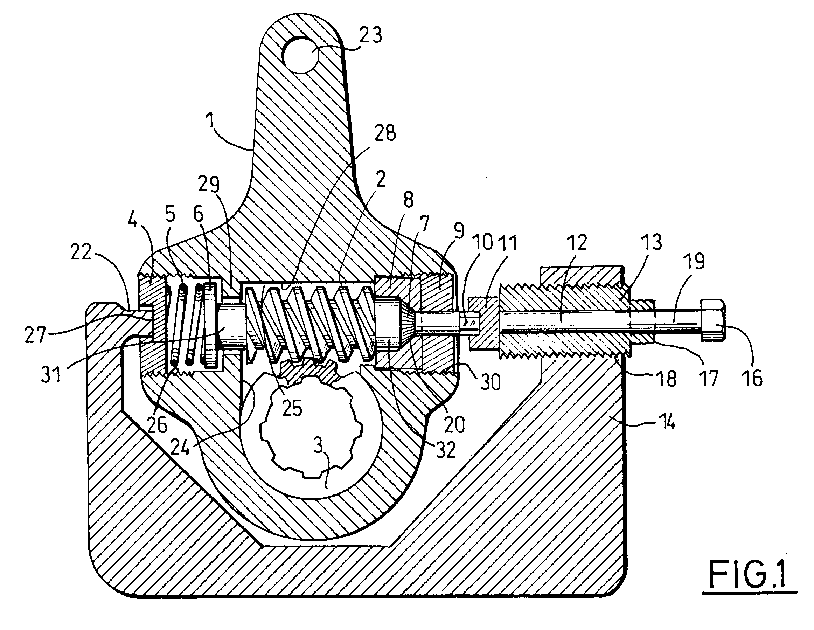

Sur la Figure 1, on a désigné par 1 le corps d'un levier de frein auto-régleur, par 2 la vis sans fin, par 3 la couronne dentée, par 4 la vis de pression du ressort 5, par 6 une rondelle d'appui entre le ressort 5 et la vis sans fin 2, par 7 les crans de blocage de la vis sans fin pris dans ceux 20 de la roue libre 8, par 9 une vis creuse, par 10 l'extrémité saillante de la vis sans fin, coiffée par la tête hexagonale creuse 11 de la tige centrale et lisse 12 qui passe au travers de la vis de serrage 13 du corps 14 de l'outil de déréglage, par 16 la tête hexagonale mâle de la tige centrale et lisse 12, par 17 la tête hexagonale mâle de la vis de serrage 13, par 18 la partie filetée femelle du corps 14, par 19 le jeu longitudinal entre la tête 16 et la tête 17 de la vis de serrage 13, et par 22 un téton de centrage de la partie fixe de l'outil, engagé dans la vis 4 de compression du ressort 5.

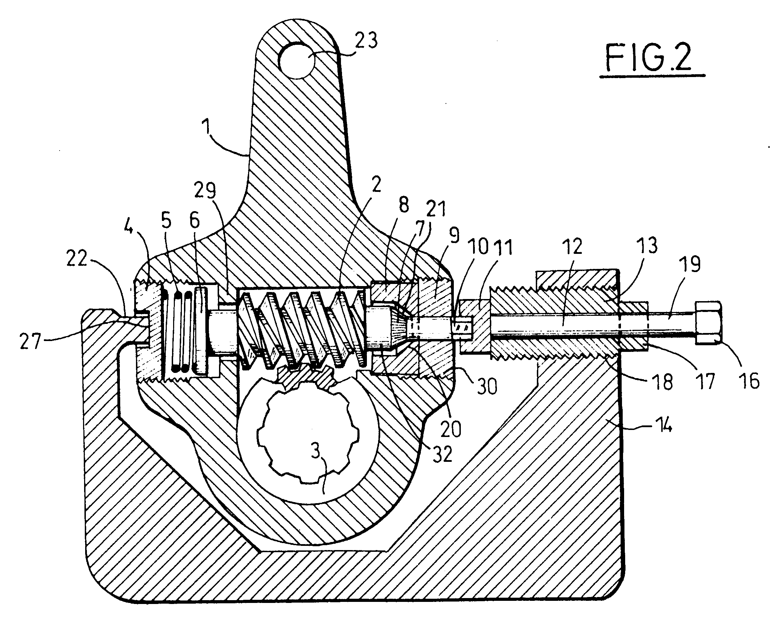

Sur la Figure 2, on a désigné par 1 le corps d'un levier de frein auto-régleur, par 2 la vis sans fin, par 3 la couronne dentée, par 4 la vis de pression du ressort 5, par 6 une rondelle d'appui entre le ressort 5 et la vis sans fin 2, par 7 les crans de blocage de la vis sans fin, écartés de ceux de la roue libre 8, par 20 les crans de blocage de la roue libre, par 21 l'espace entre les crans 20 et les crans 7 de la vis sans fin, par 9 une vis creuse, par 10 l'extrémité saillante hexagonale de la vis sans fin, coiffée par la tête hexagonale creuse 11 de la tige centrale et lisse 12 passant au travers de la vis de serrage 13, par 16 la tête hexagonale mâle de la tige centrale et lisse 12, par 17 la tête hexagonale mâle de la vis de serrage 13, par 18 la partie filetée femelle du corps 14, par 19 le jeu longitudinal entre la tête 16 et la tête 17 de la vis de serrage 13 et par 22 le guide de centrage de la partie fixe de l'outil engagé dans la vis 4 de compression du ressort 5.

Plus précisément, le corps de levier 1 est monté coulissant sur une tige 23, perpendiculaire au plan des Figures 1 et 2 et d'axe parallèle à la couronne dentée 3. Ce levier comporte une cavité 24 en forme de T dont la hampe contient la couronne dentée 3 et dont les deux branches forment un alésage étagé 25.

L'alésage 25 comprend, à son extrémité gauche en considérant les dessins, une première partie filetée 26 contenant la rondelle 6, le ressort hélicoïdal 25 et la vis 4 de compression de ce ressort, cette vis étant vissée à l'entrée de ladite partie 26. La vis 4 comporte extérieurement un évidement central 27 pour sa manoeuvre.

L'alésage étagé 25 comporte, dans sa partie médiane, une partie 28 de diamètre voisin de celui de la partie 26 et séparé de cette dernière par une collerette annulaire 29.

A son extrémité droite, l'alésage 25 comporte une partie légèrement élargie 30 dont au moins la portion extérieure est filetée.

La vis sans fin 2 est reçue dans l'alésage 25, et son extrémité gauche comporte un prolongement cylindrique lisse 31 guidé par la collerette 29 et portant, au-delà de celle-ci, la rondelle 6. A son extrémité droite, la vis 2 comporte un autre prolongement cylindrique lisse 32 suivi d'une zone tronconique convergente munie des crans 7, puis d'un prolongement cylindrique qui se termine par l'extrémité hexagonale 10. La roue libre 8 présente intérieurement un alésage étagé, cylindrique, tronconique muni des crans 20 puis cylindrique, qui s'emboîte sur le prolongement de droite de la vis 2, vient en butée contre l'épaulement radial défini entre les parties 28 et 30 de l'alésage 25, et est maintenu dans cette position par la vis creuse 9 traversée par le prolongement de droite de la vis 2.

Par ailleurs, le corps 14 de l'outil de déréglage a une forme d'étrier, adaptée pour coiffer la partie du levier 1 opposée à l'axe 23. Le guide de centrage 22 est un téton en saillie intérieure sur l'extrémité d'une des branches de cet étrier, tandis que l'alésage fileté 18 est prévu à l'extrémité de l'autre branche de l'étrier, coaxialement au guide 22. La vis creuse 13 a une forme cylindrique, prolongée du côté extérieur par la tête hexagonale 17. La tige 12 traverse à coulissement l'alésage central de la vis creuse 13, la tête intérieure 11 présentant un logement hexagonal conjugué de l'extrémité 10 de la vis sans fin et l'extrémité extérieure de cette tige comportant la tête extérieure hexagonale 16.

En fonctionnement, à chaque actionnement du frein dont fait partie le levier 1, ce dernier se déplace axialement le long de la tige 23 et, lorsque l'usure des garnitures de frein atteint une valeur prédéterminée, la rotation de la vis sans fin provoquée par ce déplacement axial fait tourner cette vis et les crans 7 de façon irréversible, de sorte que la couronne dentée 3 assure par rotation d'un pas la compensation de l'usure des garnitures lors du retour du levier 1.

Lorsque les garnitures sont complètement usées et doivent être remplacées, on utilise l'outil qui a été décrit plus haut, de la manière suivante.

Pour mettre en place l'outil de déréglage, la vis de serrage 13 est complètement dévissée, et l'on engage le guide de centrage 22 dans l'évidement 27 de la vis 4, puis on fait coulisser vers le levier de frein la tige centrale 12 jusqu'à ce que sa tête 11 coiffe la tête saillante 10 de la vis dans fin. On visse alors la vis de serrage 13 jusqu'à ce qu'elle s'appuie contre la tête 11, et on serre encore quelque peu cette vis 13 de façon que la vis sans fin 2 soit repoussée suffisamment, à l'encontre du ressort 5, pour que ses crans de blocage 7 soient écartés des crans 20 de la roue libre 8. On peut alors, à l'aide d'une clé ordinaire placée sur la tête 16, faire tourner la vis sans fin dans le sens approprié, qui est généralement le sens inverse des aiguilles d'une montre, et opérer ainsi un déréglage du dispositif de freinage, c'est-à-dire le desserrage des plaquettes de frein, sans engendrer de dégradation du mécanisme de rattrapage automatique du jeu.

## Revendications

1. Outil de déréglage d'un levier de frein auto-régleur (1) comprenant un mécanisme unidirectionnel à crans (7, 20) dont un premier élément (7) est solidaire d'une vis sans fin (2) et dont le second élément (20) est solidaire du levier (1), la vis sans fin présentant un prolongement (10) qui traverse librement ledit second élément et étant sollicitée par un ressort (5) vers ce second élément, caractérisé en ce qu'il comprend un étrier (14) comportant d'un côté un organe de centrage (22) et de l'autre côté, en regard de cet organe, une vis de serrage creuse (13) traversée axialement par une tige ronde (12) librement rotative, l'extrémité intérieure de cette tige étant munie d'une tête (11) dans laquelle est ménagé un logement creux adapté pour venir en prise d'entraînement en rotation avec ledit prolongement (10), la profondeur de ce logement étant inférieure à la longueur saillante de ce prolongement, l'extrémité extérieure de la tige (12) comportant une tête (16) pour son entraînement en rotation.

2. Outil suivant la revendication 1, caractérisé en ce que la tige (12) est montée coulissante dans la vis creuse (13).

3. Outil suivant la revendication 1 ou 2, caractérisé en ce que le logement intérieur et/ou la tête extérieure (16) de la tige (12) ont une section hexagonale.

## Claims

1. A resetting tool of a self-adjusting brake lever (1), comprising a one-way mechanism (7, 20) with notches, a first element (7) whereof is joined to an endless screw (2), and whose second element (20) is joined to the lever (1), the endless screw having an extension (10) which freely passes through the said second element and being strained by a spring (5) towards this second element, characterized in that it includes a clamp (14) comprising on one side a centring element (22) and, on the other side opposite this element, a hollow tightening screw (13) axially traversed by a round, freely rotating rod (12), the inner end of this rod being provided with a head (11) wherein a hollow recess is arranged that is adapted so as to come into engagement for rotational entrainment with the said extension (10), the depth of this recess being less than the projecting length of this extension, the outer end of the rod (12) comprising a head (16) for its entrainment in rotation.

2. A tool according to claim 1, characterized in that the rod (12) is slidably mounted in the hollow screw (13).

3. A tool according to claim 1 or 2, characterized in that the internal recess and/or the outer head (16) of the rod (12) have a hexagonal cross-section.

## Patentansprüche

1. Rückstellwerkzeug eines sich selbsttätig einstellenden Bremshebels (1), mit einem Einweg-Rastmechanismus (27), dessen erstes Element (7) fest mit einer Schnecke (2) und dessen zweites Element (20) fest mit dem Hebel (1) verbunden ist, welche Schnecke eine Verlängerung (10) aufweist, die frei durch das zweite Element hindurchgeht und durch eine Feder (5) gegen das zweite Element vorgespannt ist, dadurch **gekennzeichnet**, daß es einen Bügel (14) umfaßt, der auf der einen Seite ein Zentrierorgan (22) und auf der anderen Seite, bezogen auf dieses Organ, eine hohle Klemmschraube (13) aufweist, die axial von einer hohlen, frei drehbaren Stange (12) durchlaufen wird, wobei das innere Ende dieser Stange mit einem Kopf (11) versehen ist, zum Drehen mit der Verlängerung (10), wobei die Tiefe des Sitzes geringer als die eintretende Länge der Verlängerung ist, wobei das äußere Ende der Stange (12) einen Kopf (16) zum Drehen aufweist.

2. Werkzeug nach Anspruch 1, dadurch **gekennzeichnet**, daß die Stange (12) verschiebbar in der hohlen Schraube (13) angeordnet ist.

3. Werkzeug nach Anspruch 1 oder 2, dadurch **gekennzeichnet**, daß der innere Sitz und/oder der äußere Kopf (16) der Stange (12) einen hexagonalen Querschnitt aufweisen.
